# EUROPEAN PATENT APPLICATION

(11) **EP 0 962 775 A1**
(43) Date of publication of application: **08.12.1999**
(21) Application number: 98107716.7
(22) Date of filing: 28.04.1998
(51) Int. Cl.: G01N 35/00, G01N 33/53

(54) **Automatic analyzer with single robot arm and U-shaped reaction capillary vessels**

(71) Applicant: Recinelli, Nevio, 00054 Fiumicino (RM) (IT)
(72) Inventor: Recinelli, Nevio, 00054 Fiumicino (RM) (IT)

(57) **Abstract**

Instrument to determinate, at controlled temperature the presence of total and specific immunoglobulines against allergens or other molecules (i.e. antibody) in waterly samples.

A fully automated instrument for in vitro diagnosis, particulary dedicated to the measurement by immunochemistry method at controlled temperature, of immunoglobulines in waterly samples. It presents following characteristics:
a) compact, monobloc instrument in which all the working procedures are operated by an unique multifunctional arm that operates moving itself on the working plate;
b) the above mentioned robotic arm allows a procedure fully automated. It works on the direction of the computer program included the waiting incubation time, without any operators intervention.
c) all methods is performed at controlled temperature.

## Description

### DESCRIPTION'S TEXT

The present invention describes a complete system called 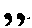 Eneasystem II T.C.", to measure with
immunochemistry method using a solid phase, the analytes present in solution.

The system is a robotic and compact instrument, fully automated, which employs particular and
capillary holders at 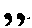 U" shape, to whom is stuck a reactive that reacts in specific manner with the analyte present in the fluid examined, such as reactive chambers.

The instrument is able to dispense the sample into the chambers, to wait the necessary time for the reaction, to perform a proper washing, very innovative, with a flow by an hole of 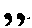 U" chamber and following aspiration by the other hole, to dispense the reagent called 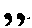 tracer", to wait again the necessary time for the second reaction, to repeat the washing procedures, to dispense the proper solution of survey, to wait the development of the reaction and to read the colorimetric or energetic variations occurred.

The specific field of the system is referred at in vitro diagnosis of allergy and autoimmunity diseases.

The primary characteristics are represented by:
1) global automatism of procedure through a robotic instrument such as a 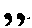 mind that commands to an unique arm performing, on the plate, all the operations without any mouvement of reactive chambers and any manual presence of the opberator,
2) a controlled temperature during all procedure,
3) employ of a special reaction's chamber shaped at 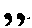 U" in order to obtain high performance,
4) innovative washing's technic of reactive chambers,
5) standardization for each group of tested molecules (for specific IgE performed per allergen's families), memorized by the instrument that can be checked through a ricalibration procedure.

### BASIC PRINCIPLES

The analyties present in biological fluids are generally detected by specific 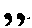 antibody-antigen" reaction that make an immunocomplex.

The reagent that reacts in specific way with analyte is marked in order to obtain the survey and the concentration of analyte.

The marking can be made with radioactive emission, fluorescent, chemiluminescent or with enzymes. In last case, the signal related to the enzyme must be obtaines with the addition of a substrate, able to modify ist condition in order to be detected (i.e. changing colour or energetic condition).

To semplify the separation between the reacted analyte and the not-reacted one, can be utilized different solid phases.

The link of specific reagent to selected solid phase, let to separate easier the immuniocomplex shaped between the specific reagent and the analyte.

It is possible to utilize many solid phases, as paper discs, plastic spheres, microplates, tubes, cellulose capsules and so on.

If the solid phase is mobile, exists the risk to remove it during the reaction and spoiling the analyses.

In the event if the solid phase is fixed, the reaction's volume is very big (from 50 to 200 ul) Some of above mentioned solid phase, allow to automated some or all procedure's steps (samples and reagents dispensation, washing and detecting reaction); in first case, making use a dedicated instrument like dispenser, washer and reader, the intervent of the operator is necessary. In second, with System in which total automation is delegated at different modules with specific functions, as transport of working plates from one to another. But, none of them, allows to complete automation of procedures, meaning use a compact, unique instrument, fixed working plate (therefore reaction's chambers) on which a robotic arm performs any operations, functioning as dispenser, washer and reader.

The ENEASYSTEM IIT.C. includes:
1) **ENEAS II T.C. RAI.** Robotic automated instrument to execute complete procedure at controlled temperature with acoustic signal of out-range.
2) **ENEAS II T.C. RC.** Ractive chambers: special and innovative reactive chambers
3) **ENEAS II T.C. TRACER.** Reagents detecting reaction.
4) **ENEAS II T.C. REFERENCE.** Referene's standards for each group of molecules.
5) **ENEAS II T.C. CALIBRATOR.** Control sera ricalibrating standard curves; one of each group of molecules.

### ENEAS II T.C. RAI

The instrument for the automated procedure of analyses is compact in dimensions, 50.00 x 60.00 x 40.00 comprehensive:
- An A.T. Computer with hard disk, a drive for floppy disks of 3.5, mainboard and video by 9'', the computer utilizes a dedicated program to control hardware, procedure execution and the management of patients archives.
- A mechanic working arm with 10 needles to wash reactive chambers, 5 needles for aspiration and 5 to dispense washing solution, a needle to dispense samples and tracer, a needle to dispense substate.
- An optical device to read the final results directly into the chambers, device connected to the abovce mentioned arm.
- Two syringes by 10 ml, connected at 2 dilutors to dispense reagents.
- Two peristaltic pumps to dispense washing solution and to discharge tubes.
- A vacuum pump (alternately a peristaltic pump) to aspirate solutions by the chambers
- A working plate as samples and reactive chambers holders, composed by 3 central cavities provided with thermostated plate with temperature sensors, for chambers holder and 4 lateral cavities to contain samples and control.
- Plates dedicated to reactive chambers; each container has 10 lines by 15 reactive chambers.
- Samples holders; each container forecasts 10/20 positions for cups by 1 / 2 ml.
- Samples holders; each container forecasts 5 positions for cups by 1 ml.
- Discharge holes for washing solution.
- A compartment to put reagents and washing solution
- A container to waste materials
- A printer
- A cover to front side of the instrument.

The utilizer has the possibility to digit through a dedicated program, all the information connected to patients and to ask, shifting a prepared panel, the analyses requested. At the end of this operation, the program presents a working list and shows, at video, how to insert the reactive chambers into the proper holders. The program asks if it is necessary to perform the ricalibration of standard curves and, in a positive answer, it asks to insert the cups in prefixed positions.

Thus, after the preliminary phase of setting up samples and reagents in the proper holders, the instruments start to work just when it reach on the working plate, the necessary temperature.

It dispenses samples and reagents, waits for relative incubation time, washes the reactive chambers and performs the reader of the reaction occurred in each chambers. At the end, it calculates the relative Units on the appropriated memorized standard curves and stamps results in Units and positive classes. All data related to patients are archived and the instrument could be connected to a Central Operator Unit P.C. in order to transfer them.

### ENEAS II T.C. R.C., Reactive chambers.

The reactive and capillary chambers present a characteristic 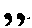 U" shape. They are composed by two capillary and vertical tubes connected by a transversal one's. The 2 vertical tubes are different in diameters, the bigger 2.00 mm and the other 1.20 mm; the transversal tube hal 1.00 mm of diameter.

The distance between the centre of the two vertical tubes is 2.30 mm. The chambers could be single or composed in a device with 5 units. In the last case the distance between the centre of two sequential chambers is 2.45 mm.

Each chamber is constituted by polished polystyrene material in the upper part and by an opaline polyethylene plug different coloured each related to different analytes. The mentioned materials could be change in order to production needs.

The particular shape of the chamber has been drawn in order to avoid any bubbles in dispensing samples and reagents and to obtain a very accurate washing of all non-reactive solution ( 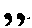 free").

The innovative technique it consists in employing a circular flow of solutions obtained by dispensing into the hole of the bigger tube and asprirating from the other one's. Thus, it allows an higher efficiency.

The cambers could also contain inclusions, as solid phase, if it represents a technical advantage.

Sample and reagent volume is comprised between 20 and 50 ul.

### ENEAS II T.C. TRACER

The tracer system includes:
- an appropriated reagent such as the antibody conjugated to an enzyme (i.e. Urease). The antibody is directed to the analyte to determinate. The antibody employed could be monoclonal or polyclonal and the enzyme could be modified in order to production needs. Alternately to the enzyme, it is possible to utilize different molecules settled of detectable signal, i.e. radioactive iodine 125 or fluorescent.
- an appropriate detecting reagent as a substrate for the empleyed enzyme. In case of urease, it is urea / bromocresol purple. Urease transforms urea determining a PH variation that determines a colour variation of the indicator reagent, from yellow to purple. Such variation is than measured by a photometer. Substrate could change relating to the enzyme employed or it could not be employed at all when the employed tracer could be directly detected.
- a buffered washing solution

### ENEAS II T.C. REFERENCE

The reference set includes standard sera at different concentrations from a minimum of 3 to a maximum of 8

Each homogeneous group of molecules has is reference set and all the employed standard sera are calibrated against International Standard (i.e. W.H.O., IgB n. 75/502, lgG n. 66/233).

### ENEAS II T.C. CALIBRATOR

The calibrator are constituted by a standard serum at known Unit concentration. The number of the different calibrators depends by the available number of reference curves.

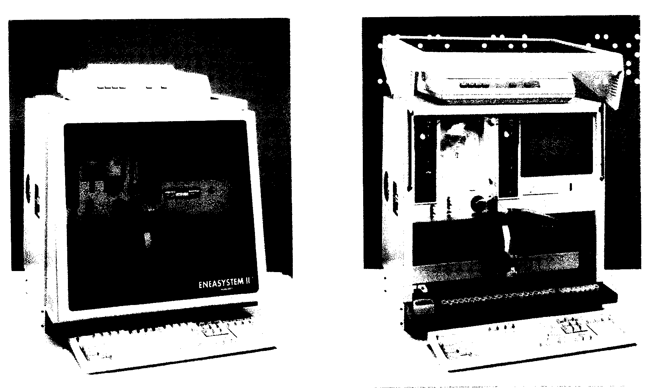

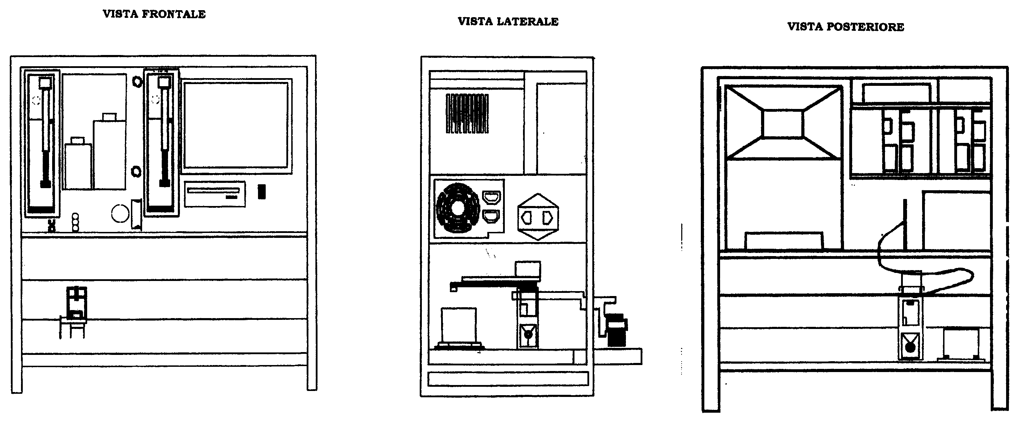

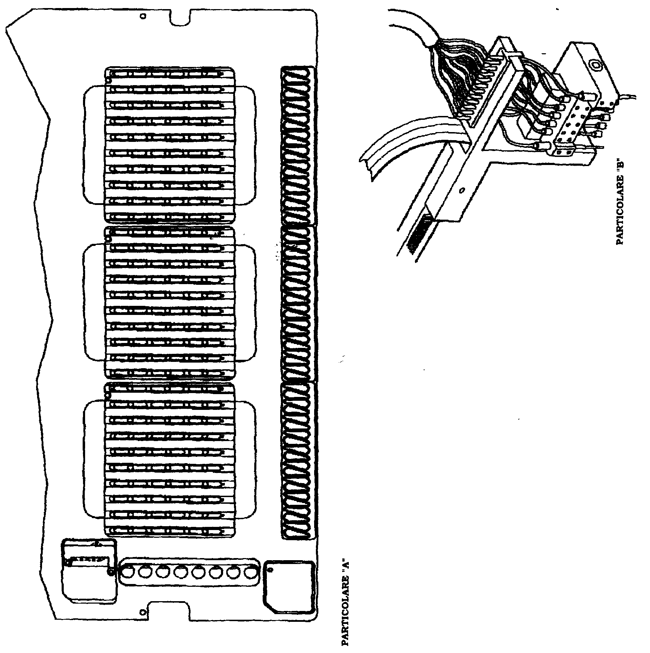

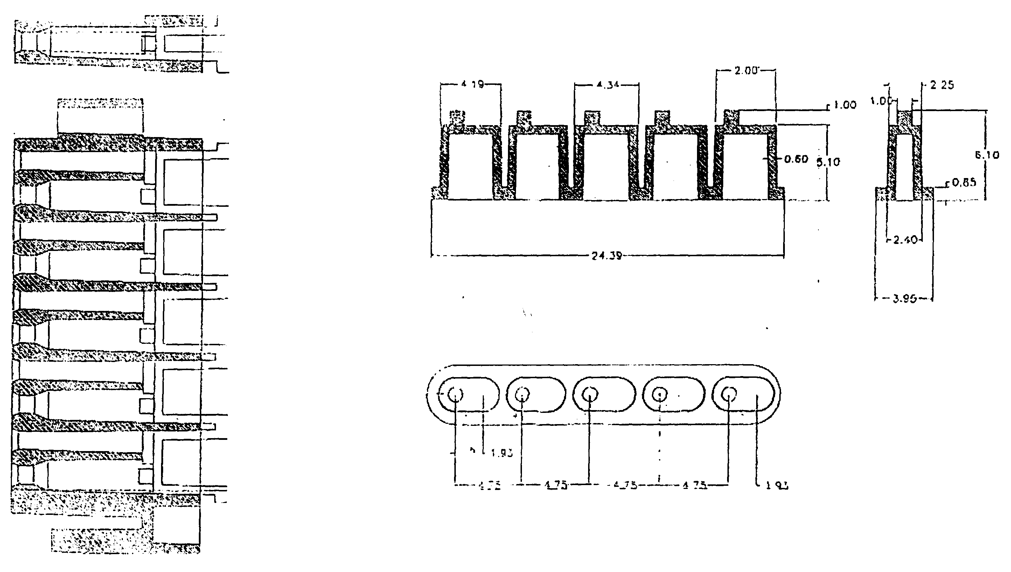

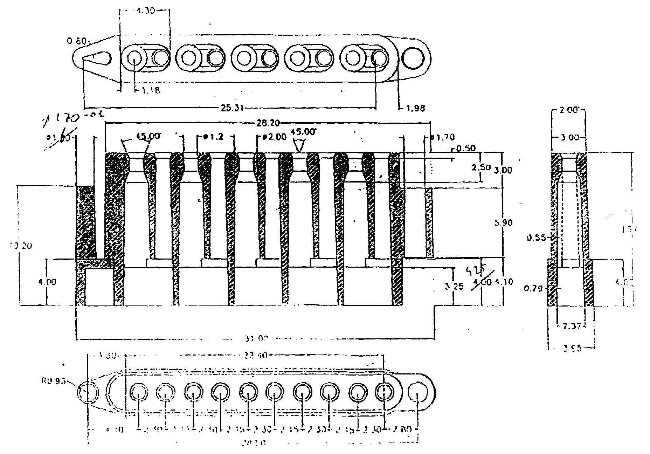

## Claims

1. A fully automated instrument for in vitro diagnosis, particularly dedicated to the measurement by immunochemistry method at controlled temperature, of immunoglobulines in waterly samples. It presents following characteristics:
a) compact, monobloc instrument in which all the working procedures are operated by an unique multifunctional arm that operates moving itself on the working plate;
b) the above mentioned robotic arm allows a procedure fully automated. It works on the direction of the computer program included the waiting incubation time, without any operators intervention.
c) all methods is performed at controlled temperature;

2. Means of revendication Point 1. associated to reactive capillary chambers shaped at 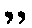 U"

3. Means of revendication Point 1. and 2. in which the reactive capillary chambers are single

4. Means of revendication Point 1. and 2. in which the reactive capillary chambers are composed in a device with 5 units.

5. Means of revendication Point 1. and 2. in which the reactive capillary chambers contain reactive included segments.

6. Means of revendication Point 1., 2., 3. and 4. in which the reactive capillary chambers have specific molecules bounded on their internal surface.

7. Means of revendication Point 1., 2. and 5. in which the included segments have reactive molecules bounded on their surface.

8. Means of revendication Point 1., 2., 6. and 7. in which the link between surface and molecules could be covalent or passive.

9. Means of revendication Point 1., 2. and 4. in which all 5 reactive chamber contain on their internal surface same bounded molecules.

10. Means of revendication Point 1., 2. and 4. in which each reactive chamber contain on their internal surface different bounded molecule

11. Complete system to determinate and quantify analytes in waterly biological or not, solution, by an immunoassay performed by points 1., 2., 3., 4., 5., 6., 7., 8., 9. and 10., thus with an instrumentation able to proceed in a fully automated way, at controlled temperature. The sequential procedures are:
a) the overtaking of the right temperature on working plate,
b) the sample filling of the reactive capillary chambers,
c) the wait for incubation time in order to let the reactive surface bound the specific analyte,
d) the removal of sample from the capillary reactive chamber by aspiration,
e) the wash of the reactive chambers in order to remove all residual non reactive components
f) the refilling of the reactive chamber with a second reagent specifically directed to the complex indicated at point 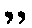 c" or the analyte present in the sample,
g) again, the wait for necessary incubation time,
h) again, the removal of the second reagent ( 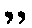 f") by aspiration,
i) again, the wash of the reactive chambers in order to remove all free second reagent,
j) the measure of quantity of the second reagents bounded to reactive surfaces:

12. Means of revendication Point 11 in which all the steps are performed automatically without any operator's intervention.

13. Means of revendication Points 11. and 12. in which all automated steps are performed at controlled temperature.
